Europäisches Patentamt

European Patent Office

Office européen des brevets

(11) Publication number: **0 174 165**
**B1**

(12) **EUROPEAN PATENT SPECIFICATION**

(45) Date of publication of patent specification: **05.07.89**

(21) Application number: **85306157.0**

(22) Date of filing: **30.08.85**

(51) Int. Cl.⁴: **H 01 B 1/20, H 01 B 3/18,
C 09 K 3/10, C 08 L 23/22,
C 08 L 71/00** // **H01R4/70,
H01M2/08, A61N1/04**

(54) Gelloid composition.

(30) Priority: **31.08.84 US 646555**

(43) Date of publication of application:
**12.03.86 Bulletin 86/11**

(45) Publication of the grant of the patent:
**05.07.89 Bulletin 89/27**

(84) Designated Contracting States:
**AT BE CH DE FR GB IT LI NL SE**

(56) References cited:
**WO-A-81/00785
DE-B-1 570 922
FR-A-2 187 846
GB-A-1 423 705
US-A-3 876 464
US-A-3 935 893**

(73) Proprietor: **RAYCHEM CORPORATION (a
Delaware corporation)
300 Constitution Drive
Menlo Park, California 94025 (US)**

(72) Inventor: **Toy, Lester Tungnan
33235 Pheasant Street
Fremont California 94536 (US)**
Inventor: **Chang, Rong Jong
32814 Shaver Lake
Fremont California 94536 (US)**

(74) Representative: **Benson, John Everett et al
Raychem Limited Intellectual Property Law
Department Faraday Road Dorcan
Swindon, Wiltshire SN3 5HH (GB)**

Courier Press, Leamington Spa, England.

# EP 0 174 165 B1

## Description

The invention relates to novel gelloid compositions, methods of making gelloid compositions, methods of covering a substrate and providing an insulating, conducting or stress grading layer of a gelloid composition and to gelloid compositions with an electrical device.

A wide variety of substrates require protection from adverse environmental conditions, including moisture, insects, dirt, plant life and corrosion deposits. In some cases, especially when electrical substrates, such as cable joints, are to be protected, it is desirable to provide a removable protective cover over the substrate, so that it is possible easily to reenter and work on the sealed substrate. A variety of materials have been proposed for this use. In UK Published Application No. 2,133,026 a sealant having a certain cone penetration and elongation is disclosed. The particular embodiment described in that application utilizes a polyurethane composition containing olefinic unsaturation. These compositions have been found to have relatively low heat stability which has tended to limit their use when they are subjected to elevated temperatures for extended periods of time. Certain electrical devices, particularly those operating at high voltage, e.g. above about 1 kV, may be subjected to operating temperatures of 90°C or higher from time to time. A sealant composition capable of withstanding such temperatures for an extended period would be advantageous.

In U.S. Patent No. 3,425,967, silicone compositions are described. These silicone compositions show thermal insulating properties and are useful with electrical devices. The silicone compositions, however, have a relatively high water permeability and tend to have low adhesion properties to common solid dielectric materials such as crosslinked polyethylene.

In U.S. Patent No. 3,935,893, a sealant layer is made of a quantity of high and low molecular weight butyl rubber, a liquid polybutylene tackifier, a partially hydrogenated block copolymer of styrene and a conjugated diene, carbon black and curing agents for the butyl rubber. The sealant is designed to heal punctures in vehicle tires and exhibits both adhesive and cohesive second degree blocking.

Novel compositions have been discovered which have a unique combination of properties especially useful with electrical devices. The compositions exhibit first degree blocking and therefore can be used to seal but can be reentered are heat stable and may be used for sealing in locations subject to elevated temperatures for extended periods, show low water or oil permeability and thus may reduce corrosion, can be useful in electrical insulating, conductive or stress grading applications, can be formed into shapes, are easy to handle and may be preformed or made *in situ*, with or without an appropriate backing.

Thus, the invention provides a gelloid composition comprising:

a crosslinked non-silicone polymer having an olefinic unsaturated content of less than 10 mole percent and having 0.1 to 3 cross-links per weight average molecule;

a liquid dispersed in the polymer in an amount of from 20—95% by weight based on the weight of the dispersed liquid and the polymer; and

a filler dispersed in the polymer and/or liquid at a volume fraction v of from 0—0.3 based on the polymer liquid and filler;

the composition having a storage modulus of

$$0.1 \ (1+2.5 \ v+14.1 \ v^2) \ X \ N/m^2 \ ((1+2.5 \ v+14.1 \ v^2) \ X \ dynes/cm^2),$$

where X is less than $5\times10^5$ at 30°C and greater than $5\times10^3$ at 90°C;

the composition having a dynamic viscosity of

$$0.1 \ (1+2.5 \ v+14.1 \ v^2) \ y \ Ns/m^2 \ ((1+2.5 \ v+14.1 \ v^2) \ y \ poises),$$

where y is less than $1\times10^5$ at 30°C and greater than $3\times10^3$ at 90°C; and

the composition exhibiting first degree blocking.

The volume fraction of the filler may be substantially or exactly zero.

The olefinic unsaturated content of the polymer may be substantially or exactly zero.

The composition of the invention may be produced by cross-linking a non-silicone liquid polymer having no or low unsaturation, and having dispersed therein a liquid and a optionally a filler.

The invention also provides a method of protecting or insulating a substrate such as an electrical device (which may for example comprise a cable) comprising:

(a) positioning adjacent the substrate a gelloid composition of the invention; and optionally

(b) at least partly covering the composition with a cover, the cover preferably also covering at least a portion of substrate, that is not covered by gelloid composition, if any.

The gelloid composition and/or the cover may provide electrical insulation. Preferably the gelloid composition itself has this function, in which case it preferably has a volume resistivity of more than $10^{10}$ ohm cm (for AC preferably measured at 50 Hz).

The gelloid composition and/or the cover may provide relief from electrical stress. Preferably the gelloid composition has this function, in which case it preferably has a specific impedence of from $10^7$—$10^{10}$ ohm cm at about 50 Hz.

The gelloid composition and/or the cover may provide a conductive path, thereby making an electrical

EP 0 174 165 B1

connection. Preferably the gelloid composition has this function, in which case it preferably has a volume resistivity of less than $10^7$ ohm cm (for AC preferably measured at 50 Hz).

In these and other methods of use, the gelloid composition may be positioned adjacent the substrate after its ingredients have been cured. Preferably a preformed, generally pre-cured gelloid composition is held under pressure against the substrate by a force means such as a spring or a resiliently deformable foam.

Alternatively, a mixture of the ingredients may be positioned and cured in situ. The mixture may be partially precured and further cured in situ.

The gelloid composition preferably contacts the substrate.

The crosslinked polymer of the gelloid composition is a non-silicone polymer having an olefinic unsaturated content less than about 10 mole percent, preferably less than about 7 mole percent, and more preferably less than 4 mole percent, and being capable of having a liquid dispersed therein. The low unsaturation content of the polymer contributes to its oxidative stability at elevated temperatures, especially around 90°C. The crosslinked polymer has from about 0.1 to about 3 crosslinks per weight average molecule, preferably from 0.5 to 2.5. The crosslinked polymer has a liquid dispersed therein of from 20 to 95% by weight based on the weight of the polymer plus dispersed liquid and preferably from 20 to 50%. The liquid can act as a plasticizer, compatibilizer or a tackifier for the composition.

The gelloid compositions of this invention are preferably elastomeric and are preferably substantially non-hydrophilic.

A characteristic feature of the gelloid composition is its storage modulus. The storage modulus (often referred to as G′) is defined as the stress in phase with the strain in a sinusoidal shear deformation divided by the strain. It is a measure of the energy stored and recovered per cycle when different systems are compared at the same strain amplitude. The storage modulus of the gelloid compositions of the invention is

$$0.1\ (1+2.5\ v+14.1\ v^2)\ X\ N/m^2\ ((1+1.5\ v+14.1\ v^2)\ X\ dynes/cm^2),$$

where X is less than $5\times10^5$ at 30°C and greater than $5\times10^3$ at 90°C, measured at 5 radians/sec at a strain of 10%, and wherein v is the volume fraction of filler. The formula $(1+2.5\ v+14.1\ v^2)$ is the standard formula known in the art to account for the effects of any filler added. (See e.g. Guth, Journal of Applied Physics, Vol. 16, pg. 120, 1945).

Another characteristic of the gelloid composition of this invention is its dynamic viscosity. The dynamic viscosity relates to the ratio of stress in phase with the rate of strain divided by the rate of strain. The dynamic viscosity of the gelloid composition of the invention is

$$0.1\ (1+2.5\ v+14.1\ v^2)\ y\ Ns/m^2\ ((1+2.5\ v+14.1\ v^2)\ y\ poises)$$

wherein y is less than $1\times10^5$ at 30°C and greater than $3\times10^3$ at 90°C, measured at 5 radians/sec at a strain of 10%, and wherein v is the volume fraction of the filler. A discussion of storage modulus and dynamic viscosity can be found in *Viscoelastic Properties of Polymers*, Ferry, pg. 43—47, 1970.

The gelloid compositions of this invention exhibit first degree blocking. First degree blocking describes an adherence between the surfaces of the composition under a test of such degree that when an upper specimen is lifted a bare specimen will cling thereto, but may be parted with no evidence of damage to either surface. The test is performed according to ASTM D-1146. Blocking of the first degree for compositions of the invention may be either cohesive (between the same material) or adhesive (between the test subject and a substrate), and preferably both.

The term gelloid is used herein to refer to the compositions of this invention which generally have the physical appearance of a gelatinous material but do not necessarily have a gel fraction and thus might not be considered traditional gels. Gelloid compositions of this invention should have a gel fraction between 0 and 76%. Preferably the composition should have a gel fraction of less than 50% and most preferably a gel fraction of less than 15%.

Preferably, the compositions of the invention has a cone penetration value as measured by ASTM D-937-77 of from 30 to 350 ($10^{-1}$ mm) and preferably from 50 to 150 ($10^{-1}$ mm). Further, said composition preferably has an elongation as measured by ASTM D-412 of from 25% to 750% and more preferably from 150% to 300%.

The electrical properties of the composition can vary making it useful in insulation, stress grading and conductive applications. In insulation applications, the compositions preferably have a dielectric constant (permittivity) of less than 6 at 50 Hz (as measured by ASTM D-150) and a volume resistivity of at least $10^{10}$ ohm-cm (as measured by ASTM D-257). For stress grading applications the compositions preferably have a dielectric constant of greater than 6 and a specific impedance of $10^7$—$10^{10}$ ohm-cm at 50 Hz (ASTM D-150), and for conductive applications the compositions preferably have a volume resistivity of less than $10^7$ ohm-cm.

The invention also comprises a method for making a gelloid composition comprising subjecting a non-silicone liquid polymer and a liquid dispersed therein to crosslinking e.g. chemically or by radiation for example with an electron beam or with an ultra-violet light. The polymer starting material is preferably a

3

crosslinkable liquid polymeric material, preferably a non-silicone liquid rubber, preferably with low or no unsaturation prior to crosslinking. The liquid polymeric material preferably has a molecular weight of less than about 90,000, preferably less than about 50,000, and a Mooney viscosity of ML 1+4 at 100°C of less than 10. Mooney viscosity is measured by ASTM D-1646. Said polymers are primarily liquids at these molecular weights and viscosities. The liquid polymer preferably has a molecular weight less than about 7.5 times the polymer's critical molecular weight (see e.g. Mechanical prop of Polymers, Nielsen 1962 for a discussion of critical molecular weight). The polymers may have a hydrocarbon backbone or may contain other atoms as well as carbon, e.g. oxygen, nitrogen etc. The polymer is a non-silicone polymer and it will not have silicon atoms in its backbone. The polymers are preferably those which have low or no unsaturation prior to crosslinking. In general, the amount of unsaturation will be less than 10 mole percent, preferably less than 7 mole percent and preferably less than 4 mole percent. If the unsaturation is too high the resulting product tends to be thermally unstable.

Preferred polymeric materials include liquid butyl rubber, epichlorohydrin rubber, ethylene-propylene-diene monomer rubber (EPDM), hydrogenated polyisoprene, hydrogenated polybutadiene, hydrogenated styrene-butadiene rubber (SBR), hydrogenated polychloroprene, functionalized polyisobutylene (i.e. polyisobutylene with reactive groups added that are capable of crosslinking such as hydroxy, amine or carboxy groups), chlorinated polyethylene, liquid fluorinated polymers (e.g. Viton (Trade Mark) from DuPont), nitrile rubber, which may be hydrogenated, and other hydrogenated liquid polymers. Further, one can combine the various polymers to form compositions of desired properties.

The liquid dispersed in the crosslinked polymer in accordance with this invention can be any liquid which is capable of being dispersed in the polymer in an amount from 20% to 95%, and which does not react during crosslinking of the polymer. The liquid may be for example a plasticizer, compatibilizer, tackifier. Suitable liquids include, for example, paraffinic oils, naphthenate oils, aromatic oils, liquid polybutenes, alkyl such as ch-octyl (or aryl) phthalates, vegetable oils, mineral oils, trimellitates, esters of polyethylene glycols, alkyl (or aryl) phosphates, methyl ester of hydrogenated wood rosin, liquid rosin oils, pine tar, polyterpenes, non-reacting liquid rubbers. The liquid may be of the same chemical type as the polymer. For example, the liquid may be part of the liquid non-silicone polymer which remains substantially uncrosslinked, i.e. to an extent of less than 0.1 crosslink per weight average molecule.

Crosslinking may be by any conventional crosslinking means, preferably UV means, other radiation means or chemical means. Radiation crosslinking can for instance be accomplished by electron beam. Suitable crosslinking promoters may be incorporated to encourage radiation crosslinking such as triallylcyanurate and triallylisocyanurate. Suitable chemical crosslinking agents can be chosen based on the individual polymer or polymers used. For example, a phenolic resin or p-quinone dioxime may be used to cure for example butyl rubber, peroxide can be used to cure for example EPDM, or diisocyanate dimer acid may be used to cure for example epichlorohydrin rubber. An alternative cross-linking agent is phenolic resin.

Optionally, a plasticizer may be added to help obtain a gelloid with the desired cone penetration values. Such plasticizers include all liquids that are capable of reducing the viscosity of the base rubber or other non-silicone polymer, have low or no unsaturation as described above and are compatible with the base rubber.

A filler may be added to the composition, if desired. The amount of filler added is from 0 to 0.3 volume fraction. Preferably, the filler is in an amount from 0.1 to 0.2 volume fraction. The term "filler" is used herein to include all solid additives including particulate matter or fibrous matter present in the composition. These fillers include pigments, fillers known for conductive (both electrical and thermal), stress grading and insulative purposes e.g. carbon black, barium titanate, zinc oxide, iron oxide, silicon carbide, metals and the like, reinforcing agents, thermal stabilizers, fungicides, biocides, flame retardants, for example aluminum trihydrate and the halogenated flame retardants, leak indicators (i.e. chemicals which react upon exposure to leaked chemicals), corrosion inhibitors, ultraviolet light stabilizers, processing aids, impact modifiers and the like. Two or more of these types of fillers may be used together.

The compositions are formed preferably by mixing a liquid non-silicone polymer with any desired filler in an amount of from 0 to 0.3 volume fraction, any crosslinking agents or the like and the liquid, and subjecting the mixture to a crosslinking means. The composition will generally take the shape of its container during crosslinking but can be reshaped, e.g. by cutting as desired. It is also possible to form the composition *in situ*, i.e. by applying the liquid polymer and compatible liquid in the location to be used and crosslinking at that particular location.

As described above the gelloid compositions, because of their specific physical properties, are useful especially in electrical devices such as cables, for example at cable splices, terminations, breakouts, electrical connections. A further aspect of the invention comprises electrical devices with the gelloid compositions, the gelloid compositions comprising a crosslinked non-silicone polymer having an olefinic unsaturated content of less than 10 mole percent and having from 0.1 to 3 crosslinks per weight average molecule and having dispersed therein a liquid in an amount of from about 20% to 95% by weight based on the weight of the total gelloid composition, and 0 to 0.3 volume fraction of a filler, said composition having a storage modulus of

$$(1+2.5 \ v+14.1 \ v^2) \ X \ dynes/cm^2$$

4

wherein X is less than $5\times10^5$ at 30°C and greater than $5\times10^3$ at 90°C, and v is the volume fraction of said filler, a dynamic viscosity of

$$(1+2.5\ v+14.1\ v^2)\ y\ \text{poises}$$

wherein y is less than $1\times10^5$ 30°C and greater than $3\times10^3$ at 90°C and v is the volume fraction of said filler, and exhibiting first degree blocking.

The gelloid compositions may be made into hot or cold applied tapes, tubes, or sheets, with or without a backing, (which backing may be dimensionally recoverable and is usually polymeric, provided in a container, used with molded rubbers, attached to dimensionally recoverable tubular and sheet products, used with hot or cold applied tapes, with or without a backing.

The gelloid compositions can be formed into shaped articles, such as profiles shaped to accommodate an adjacent pair of conductors or cables. Shaped articles are particularly useful where a seal is necessary. A particular gelloid composition may therefore be chosen based on the particular application of the gelloid composition and on the desired properties. It is a desirable property of gelloid compositions that they are easily handled and allow re-entry when used around, for example, cable splices or terminations. When said gelloid compositions are applied to a support such as a backing, a molded rubber, or are in a container they may be adhered to the support by any convenient method. For example, they may stick due to their own tackiness i.e. first degree blocking, may be heat treated, may be formed *in situ* or mastics and adhesives may be used to provide or further to enhance or make permanent the adhesion. Other means of applying the gelloid compositions include both internal and external use of solder, wirebond or crimps.

As is readily apparent the compositions of the invention are extremely versatile in their ability to be used in a variety of situations especially electrical. The above list is illustrative of such uses and is provided as illustration and not limitation. One skilled in the art would be able to provide alternative uses. In order to describe the invention more fully several uses of a gelloid composition and a gelloid composition with an electrical device are described in detail below.

The composition can be used to seal the cover of a low voltage (i.e. below about 1000 volts) cable joint to the cables adjacent the joint. Two cables have their outer layers of insulation, shielding and protection stripped back to expose their conductors. The conductors are then connected by a connector. A composition of this invention, preferably in tape form is wrapped around the bare conductors extending just beyond the terminated layers. A cover (e.g. heat shrink material, tape, etc.) is positioned such that it covers the connected conductors and extends beyond the gelloid composition tapes. The tapes provide environmental seals between the cover and the cables.

Because an environmental seal can be provided, the gelloid compositions can be used in a wide variety of situations and applied where corrosion protection is necessary. The composition for example can be used to bond a cover to a substrate. A tape of this composition may be positioned circumferentially around, say, a pipeline. A similar tape is likewise positioned a given distance from the first tape. A cover (e.g. heat shrunk material, tape, etc.) is positioned such that it covers the pipeline extending at each end just beyond the tapes positioned on the pipeline.

When gelloid compositions of the invention are insulating, conducting, or stress grading they can be used for example in high voltage applications. When jointing high voltage cables (i.e. above 1000 V), the insulation, shielding, grounding, jacket, etc., must be stripped back to expose the conductors. The exposed conductors are then connected by mechanical means such as connectors, solder, wire, etc. The area of the exposed connection is under high electrical stress. Gelloid composition of the invention having a specific impedance of $10^7$—$10^{10}$ ohm-cm at 50 Hz can be applied to these areas as stress grading material. This gelloid material is also placed immediately adjacent the connection at the end of the stripped back shielding or other conductive layer and any other area of the joint where stress grading is necessary. A composition of the invention that is an insulating material, and has a volume resistivity of at least $10^{10}$ ohm-cm, can be placed over the stress grading inner layer. Likewise, conductive gelloid compositions having a volume resistivity of less than $10^7$ ohm-cm, can be used as an outer conductive layer on such a high voltage joint and placed over the insulating layer. Likewise, when terminating a high voltage cable a stress grading inner and insulating outer layers of the gelloid material can be used. The gelloid composition can be used for any one or more of these layers.

Conductive gelloid compositions of the invention can be used to prevent high voltage discharge from any protrusion in a high voltage application, for example a busbar connection. They can be used as shielding on cables to mask R.F. signals from interference or to prevent excessive emission e.g. in cryptographic cable equipment. The conductive gelloids have a wide variety of uses as electrical contacts. Because the gelloid compositions exhibit first degree blocking, separation of pieces of gelloid material may be gradual rather than abrupt as with metallic electrical contacts. Therefore the connection between the contacts may exhibit progressive change in resistance rather than an abrupt change in resistance. This progressive change in resistance is useful in preventing arcing between electrical contact points when making or breaking a circuit. Further the gelloid composition can be used as a contact between two metal electrical contacts especially between contacts of different metals e.g. aluminum and copper to prevent bimetallic corrosion i.e. sacrificial anode corrosion.

Other uses are insulation of light bulb sockets from corrosion, provision of a non-corrodable ground path, and provision of anti-corrosion for a battery connection or for other surfaces. Also the composition can be made pressure sensitive and its conductivity can be made to change with its thickness, allowing its use as a pressure transducer.

Because the gelloid compositions exhibit first degree cohesive and/or adhesive blocking and may be conductive they may used as bioelectrical contacts. For example, they may be used as EKG contacts, heart rate monitor contacts or even on cardiac electro-stimulation devices i.e. electrical output devices for restarting a stopped heart. The gelloid compositions would be especially useful because of the ease of application and ease of clean-up. Gels, adhesives and greases that exhibit second degree cohesive blocking are difficult to remove from the skin and generally cannot be preformed into shapes, as can the gelloid compositions of the invention.

The following examples further illustrate the invention, and are not limiting. One skilled in the art would readily be able to select appropriate crosslinking agents, crosslink promoters, liquid rubbers, radiation amounts, particular uses, etc. for a particular application without undue experimentation.

Example 1
Dielectric gelloid composition based on chemically crosslinked polyisobutylene

The following ingredients were mixed in a Sigma mixer (Trade Mark), and then cured for 30 minutes at 100°C to form a gelloid.

| | |
|---|---|
| Liquid butyl rubber | 100 g |
| Zinc stearate-filler | 5 g |
| Zirex (Trade Mark) (zinc resinate)-chemical crosslinking activator and filler | 10 g |
| Paraffinic oil—plasticizer liquid | 90 g |
| p-quinone dioxime (62.5% in oil)-crosslinking agent | 3.2 g |
| Lead dioxide (50% in dibutylphthalate)-cure activator | 3.2 g |
| Carbon black—colorant & U.V. light stabiliser | 2 g |

The resulting gelloid composition had a volume resistivity of $10^{14}$ ohm-cm (ASTM D-150), a permittivity @ 50 Hz of 3.0 (ASTM D-257) a cone penetration of 112 and elongation of 350%. The gelloid composition did not exhibit a gel fraction. The storage modulii were: $1.47\times10^4$ N/m² ($1.47\times10^5$ dynes/cm²) at 30°C and; $4.8\times10^3$ N/m² ($4.8\times10^4$ dynes/cm²) at 90°C; and dynamic viscosities were $3\times10^3$ Ns/m² ($3.0\times10^4$ poises) at 30°C; and $9.9\times10^2$ Ns/m² ($9.9\times10^3$ poises) at 90°C. The gelloid exhibited first degree blocking.

Example 2

The procedure of Example 1 was repeated, except that a reactive phenolic resin was used as a cure agent in place of p-quinone dioxime. The volume resistivity of the gelloid composition was $10^{14}$ ohm-cm, its permittivity was 3.0, and its cone penetration was 50.

Example 3
Oil resistant, stress grading, gelloid composition based on chemically crosslinked epichlorohydrin

The following ingredients were mixed and then cured for 60 minutes at 100°C to form a gelloid composition.

| | |
|---|---|
| Hydrin 10X1 (Trade Mark) (liquid epichlorohydrin rubber) | 100 g |
| Dimer acid diisocyanate-crosslinking agent | 46 g |
| Dioctyl phthalate-plasticizer—liquid | 100 g |
| T-12—tin catalyst | 10 g |
| Dabco 33LV (Trade Mark) (tertiary amines— co-catalyst) | 2 g |
| Antioxidant 2246-substituted phenol type of antioxidant | 0.8 g |

The resulting gelloid composition had a specific impedance of 50 Hz of $1.8\times10^9$, a permittivity at 50 Hz of 7.7, and a cone penetration value of 51.

Example 4
Oil resistant, stress grading, gelloid composition based on chemically crosslinked epichlorohydrin

The following ingredients were mixed and then cured for 60 minutes at 100°C to form a gelloid composition.

| | |
|---|---|
| Hydrin 10X1 (Trade Mark) (liquid epichlorohydrin rubber) | 100 g |
| Versamid 125 (Trade Mark) (liquid polyamide) | 15 g |
| Diundecyl phthalate-plasticizer—liquid | 50 g |
| Lectro 78 (Trade Mark) (lead stabilizer) | 5 g |
| Red iron oxide | 15 g |

EP 0 174 165 B1

The resulting gelloid composition had a specific impedance at 50 Hz of $1.5 \times 10^8$, a permittivity at 50 Hz of 18.9, and a cone penetration value of 150.

**Example 5**
Dielectric gelloid composition based on EPDM, crosslinked by electron beam radiation

| | |
|---|---|
| Kalox (Trade Mark) (liquid EPDM)—liquid rubber | 100 g |
| Kaydol oil (Trade Mark) (mineral oil) plasticizer liquid | 90 g |
| Trimethylol propane trimethacrylate (crosslinking promoter) | 2 g |

The above ingredients were mixed and radiated at 10—20 megarads to produce a gelloid with a cone penetration value of 50—56, a resistivity of $10^{14}$ ohm-cm, a permittivity of 2.7 @ 50 KH, and an elongation of 200%.

**Example 6**
Dielectric gelloid composition based on EPDM, crosslinked by peroxide

| | |
|---|---|
| Kalox (Trade Mark) (liquid EPDM)—liquid rubber | 100 g |
| Indopol H100 (Trade Mark) (polybutene) plasticizer—liquid | 90 g |
| D-cup 40KE (dicumyl peroxide)—crosslinking agent | 7 g |

The above ingredients were mixed and crosslinked at 150°C for one hour, to produce a gelloid composition with a cone penetration value of 144, a resistivity of $10^{14}$ ohm-cm and a permittivity 2.7.

**Example 7**
Stress grading butyl gelloid composition

| | |
|---|---|
| Kalene (Trade Mark) 200 (liquid butyl rubber) | 100 g |
| Kaydol oil (Trade Mark) (mineral oil) liquid | 95 g |
| p-quinone dioxime dispersion (62.5%) | 4.8 g |
| Lead dioxide dispersion (50%) | 18 g |
| N990 carbon black (Thermax MT, (Trade Mark)) | 69.4 g |
| S37 carbon black (Vulcan P, (Trade Mark)) | 14.7 g |

The above ingredients were mixed and crosslinked at 100°C for 30 minutes, to produce a gelloid composition with a cone penetration value of 81, a specific impedance of $9.5 \times 10^8$, and a permittivity of 32.6.

**Example 8**
Conductive butyl gelloid composition

| | |
|---|---|
| Kalene 200 (Trade Mark) (liquid butyl rubber) | 100 g |
| Kaydol oil (Trade Mark) (mineral oil) plasticizer liquid | 95 |
| p-quinone dioxime dispersion (62.5%) curing agent | 4.8 g |
| Lead dioxide dispersion (50%) curing activator | 18 g |
| Ketjen carbon black (conductive carbon black) | 20 g |

The above ingredients were mixed and crosslinked at 100°C for 30 minutes, to produce a gelloid composition with a cone penetration value of 42, and a volume resistivity $2.4 \times 10^5$ ohm-cm.

**Example 9**
Gel tape formulation

| | |
|---|---|
| Kalene 800 (Trade Mark) (liquid butyl rubber) | 100 |
| Sunpar 2280 (Trade Mark) (plasticizer) (paraffinic oil) | 102 |
| Kenmix (Trade Mark) PbO2 dispersion (lead oxide) | 15 |
| Austin Black (Trade Mark) (carbon black) | 3 |
| Irgonox 1010 (Trade Mark) (antioxidant) | 1 |
| Antozite 1 (Trade Mark) (antioxidant) | 1 |
| SAG47 (Trade Mark) (silicone antifoaming agent) | 3.4 |
| Quinone dioxime dispersion (62.5% in light Circo oil) | 4.5 |
| Vancide 89 (Trade Mark) (fungicide) | 2.8 |

7

The above ingredients were mixed, and cured for 3 hours at 90°C.
The resulting gelloid had the following properties:

Gel content (based on liquid butyl rubber)=47%.

Storage modulus at 30°C=$1.6\times10^5$ dynes/cm$^2$.

Storage modulus at 90°C=$1.0\times10^5$ dynes/cm$^2$.

Dynamic viscosity at 30°C=$3.4\times10^4$ poises.

Dynamic viscosity at 90°C=$2.0\times10^4$ poises.

Exhibits first degree blocking.

The gelloid was suitable for impregnation into an open-cell foam or other suitable backing to produce a gel tape.

**Claims**

1. A gelloid composition comprising:
a crosslinked non-silicone polymer having an olefinic unsaturated content of less than 10 mole percent and having 0.1 to 3 crosslinks per weight average molecule;
a non-aqueous liquid dispersed in the polymer in an amount of from 20—95% by weight based on the weight of the dispersed liquid and the polymer; and
a filler dispersed in the polymer and/or liquid at a volume fraction v of from 0—0.3 based on the polymer, liquid and filler;
the composition having a storage modulus of

$$0.1 \ (1+2.5 \ v+14.1 \ v^2) \ X \ N/m^2 \ ((1+2.5 \ v+14.1 \ v^2) \ X \ dynes/cm^2),$$

where X is less than $5\times10^5$ at 30°C and greater than $5\times10^3$ at 90°C;
the composition having a dynamic viscosity of

$$0.1 \ (1+2.5 \ v+14.1 \ v^2) \ y \ Ns/m^2 \ ((1+2.5 \ v+14.1 \ v^2) \ y \ poises),$$

where y is less than $1\times10^5$ at 30°C and greater than $3\times10^3$ at 90°C; and
the composition exhibiting first degree blocking.

2. A composition according to claim 1, wherein the non-silicone polymer comprises a butyl rubber, an epichlorohydrin rubber, and ethylene-propylene
diene monomer rubber, a hydrogenated styrene-butadiene rubber, a nitrile rubber or a functionalized polyisobutylene.

3. A composition according to claim 1 or 2, wherein the dispersed liquid is a non-silicone, non-reacting liquid rubber having from 0—0.1 crosslinks per weight average molecule.

4. A composition according to claim 1, 2 or 3, wherein the dispersed liquid is a plasticizer.

5. A composition according to any preceding claim, which has an elongation of from 25—75%.

6. A composition according to any preceding claim, which has a cone penetration value of from 30—350 ($10^{-1}$ mm).

7. A composition according to any preceding claim, in the form of a sheet or a tube.

8. A composition according to any preceding claim in combination with a backing layer.

9. A composition according to claim 8, wherein the backing is dimensionally recoverable.

10. A composition according to any preceding claim, having a gel fraction of less than 76%.

11. A composition according to claim 10 having a gel fraction of substantially zero.

12. A composition according to any preceding claim, having a volume resistivity of at least $10^{10}$ ohm cm.

13. A composition according to any of claims 1—11, having a specific impedance of from $10^7$—$10^{10}$ ohm cm at 50 Hz.

14. A composition according to any of claims 1—11, having a volume resistivity of less than $10^7$ ohm cm.

15. An electrical device in combination with a gelloid composition according respectively to claims 12, 13 or 14, to provide respectively electrical insulation, stress grading or an electrical connection.

16. A method of making a gelloid composition according to any of claims 1—14, which comprises cross-linking a composition comprising:
a non-silicone liquid polymer;
a liquid dispersed in the polymer in an amount of from 20—95% by weight based on the weight of the dispersed liquid and the polymer; and
a filler dispersed in the polymer and/or the liquid at a volume fraction of from 0—0.3 based on the polymer, liquid and filler.

17. A method of protecting or isolating a substrate, which comprises:
(a) positioning adjacent the substrate a gelloid composition according to any of claims 1—14.

18. A method according to claim 17, which additionally comprises:
(b) at least partially covering the gelloid composition by a cover.

# EP 0 174 165 B1

19. A method according to claim 18, in which the cover is dimensionally-recoverable, the method additionally comprising:

(c) causing recovery of the cover.

20. A method according to claim 17, 18 or 19, wherein at least one of the ingredients of the gelloid composition is crosslinked after positioning them adjacent the substrate.

21. A method according to any of claims 17—20, wherein the substrate is electrically insulated, stress graded or has an electrical connection, provided by a gelloid composition according respectively to claim 12, 13 or 14.

22. A method according to any of claims 17—21, wherein the substrate comprises a cable.

**Patentansprüche**

1. Geloide Zusammensetzung, gekennzeichnet durch:

—ein vernetztes Nichtsilikon-Polymer mit einem olefinischen ungesättigten Anteil von weniger als 10 Molprozent und mit 0,1 bis 3 Vernetzungen pro Durchschnitts - Molekulargewicht;

—eine nichtwässrige Flüssigkeit, die in dem Polymer in einer Menge von 20 bis 95 Gew.-%, bezogen auf das Gewicht der dispergierten Flüssigkeit und des Polymeren, dispergiert ist; und

—ein Füllmittel, das in dem Polymer und/oder der Flüssigkeit zu einem Volumen-Bruchteil v von 0—0,3, bezogen auf das Polymer, die Flüssigkeit und das Füllmittel, dispergiert ist;

—einen Speichermodul von

$$0,1 \ (1+2,5 \ v+14,1 \ v^2) \ X \ N/m^2 \ ((1+2,5 \ v+14,1 \ v^2) \ X \ dyn/cm^2),$$

wobei X bei 30°C kleiner als $5 \times 10^5$ und bei 90°C größer als $5 \times 10^3$ ist;

—eine dynamische Viskosität von

$$0,1 \ (1+2,5 \ v+14,1 \ v^2) \ y \ Ns/m^2 \ ((1+2,5 \ v+14,1 \ v^2) \ y \ Poise),$$

wobei y bei 30°C kleiner als $1 \times 10^5$ und bei 90°C größer als $3 \times 10^3$ ist; und

—ein Blocken ersten Grades der Zusammensetzung.

2. Zusammensetzung nach Anspruch 1, wobei das Nichtsilikon-Polymer einen Butyl-Kautschuk, einen Epichlorhydrin - Kautschuk, eine Ethylen - Propylen - Dien - Monomer - Kautschuk, einen hydrierten Styrol - Butadien - Kautschuk, einen Nitril-Kautschuk oder ein funktionalisiertes Polyisobutylen enthält.

3. Zusammensetzung nach Anspruch 1 oder 2, wobei die dispergierte Flüssigkeit ein Nichtsilikon-, nichtreagierender Flüssig-Kautschuk mit 0—0,1 Vernetzungen pro Durchschnitts - Molekulargewicht ist.

4. Zusammensetzung nach Anspruch 1, 2 oder 3, wobei die dispergierte Flüssigkeit ein Weichmacher ist.

5. Zusammensetzung nach einem der vorangehenden Ansprüche, welche eine Bruchdehnung von 25 bis 75% aufweist.

6. Zusammensetzung nach einem der vorangehenden Ansprüche, welche eine Konuspenetration von 30 bis 350 ($10^{-1}$ mm) aufweist.

7. Zusammensetzung nach einem der vorangehenden Ansprüche in Form einer Platte oder eines Rohrs.

8. Zusammensetzung nach einem der vorangehenden Ansprüche in Kombination mit einer Trägerschicht.

9. Zusammensetzung nach Anspruch 8, in der der Träger dimensional rückverformbar ist.

10. Zusammensetzung nach einem der vorangehenden Ansprüche, mit einer Gel-Fraktion von weniger als 76%.

11. Zusammensetzung nach Anspruch 10, deren Gel-Fraktion im wesentlichen Null ist.

12. Zusammensetzung nach einem der vorangehenden Ansprüche, mit einem spezifischen Durchgangswiderstand von mindestens $10^{10}$ Ohm cm.

13. Zusammensetzung nach einem der Ansprüche 1 bis 11, mit einer spezifischen Impedanz von $10^7$ bis $10^{10}$ Ohm cm bei 50 Hz.

14. Zusammensetzung nach einem der Ansprüche 1 bis 11, mit einem spezifischen Durchgangswiderstand von weniger als $10^7$ Ohm cm.

15. Elektrische Einrichtung in Kombination mit einer geloiden Zusammensetzung gemäß Anspruch 12, 13 bzw. 14, zur Bildung einer elektrischen Isolierung, Spannungsabstufung bzw. eines elektrischen Anschlusses.

16. Verfahren zur Herstellung einer geloiden Zusammensetzung nach einem der Ansprüche 1 bis 14, umfassend das Vernetzen einer Zusammensetzung, welche

—ein Nicht-Silikon-Flüssig-Polymer;

—eine Flüssigkeit, die im Polymer in einer Menge von 20—95 Gew.-%, bezogen auf das Gewicht der dispergierten Flüssigkeit und des Polymeren, dispergiert ist; und

—ein Füllmittel das im Polymer und/oder der Flüssigkeit mit einem Volumenanteil von 0—0,3, bezogen auf das Polymer, die Flüssigkeit und den Füllstoff, dispergiert ist; enthalt.

9

17. Verfahren zum Schützen oder Isolieren eines Substrats, welches

(a) das Positionieren einer geloiden Zusammensetzung nach einem der Ansprüche 1 bis 14 am Substrat umfaßt.

18. Verfahren nach Anspruch 17, welches zusätzlich

(b) das mindestens teilweise Bedecken der geloiden Zusammensetzung mit einer Deckschicht umfaßt.

19. Verfahren nach Anspruch 18, in welchem die Deckschicht dimensional rückverformbar ist, wobei das Verfahren zusätzlich

(c) die Rückverformung der Deckschicht auslöst.

20. Verfahren nach Anspruch 17, 18 oder 19, wobei mindestens einer der Bestandteile der geloiden Zusammensetzung nach deren Positionierung am Substrat vernetzt wird.

21. Verfahren nach einem der Ansprüche 17 bis 20, wobei das Substrat elektrisch isoliert, spannungsabgestuft ist oder einen elektrischen Anschluß aufweist, was durch eine geloide Zusammensetzung nach Anspruch 12, 13 bzw. 14 erreicht wird.

22. Verfahren nach einem der Ansprüche 17 bis 21, wobei das Substrat ein Kabel umfaßt.


**Revendications**

1. Composition analogue à un gel comprenant:

un polymère non siliconé réticulé ayant une teneur en insaturation oléfinique inférieure à 10 moles % et comprenant 0,1 à 3 réticulations par molécule de poids moyen;

un liquide non aqueux dispersé dans le polymère en une quantité de 20 à 95% en poids, sur la base du poids du liquide dispersé et du polymère; et

une charge dispersée dans le polymère et/ou le liquide en une fraction en volume $v$ de 0 à 0,3, sur la base du polymère, du liquide et de la charge;

la composition ayant un module d'emmagasinage de

$$0,1 \ (1+2,5 \ v+14,1 \ v^2) \ X \ N/m^2 \ ((1+2,5 \ v+14,1 \ v^2) \ X \ dynes/cm^2),$$

$X$ étant inférieur à $5\times10^5$ à 30°C et supérieur à $5\times10^3$ à 90°C;

la composition ayant une viscosité dynamique de

$$0,1 \ (1+2,5 \ v+14,1 \ v^2) \ y \ Ns/m^2 \ ((1+2,5 \ v+14,1 \ v^2) \ y \ poises),$$

$y$ étant inférieur à $1\times10^5$ à 30°C et supérieur à $3\times10^3$ à 90°C; et

la composition présentant une adhérence de contact du premier degré.

2. Composition suivant la revendication 1, dans laquelle le polymère non siliconé consiste en un caoutchouc butyle, un caoutchouc d'épichlorhydrine, un caoutchouc éthylène - propylène - monomère diénique, un caoutchouc styrène-butadiène hydrogéné, un caoutchouc nitrile ou un polyisobutylène fonctionnalisé.

3. Composition suivant la revendication 1 ou 2, dans laquelle le liquide dispersé est un caoutchouc liquide non siliconé, non réactif, comprenant 0 à 0,1 réticulation par molécule de poids moyen.

4. Composition suivant la revendication 1, 2 ou 3, dans laquelle le liquide dispersé est un plastifiant.

5. Composition suivant l'une quelconque des revendications précédentes, qui présente un allongement de 25 à 75%.

6. Composition suivant l'une quelconque des revendications précédentes, qui présente une valeur de pénétration du cône de 30 à 350 ($10^{-1}$ mm).

7. Composition suivant l'une quelconque des revendications précédentes, sous forme d'une feuille ou d'un tube.

8. Composition suivant l'une quelconque des revendications précédentes, en association avec une couche de renforcement.

9. Composition suivant la revendication 8, dans laquelle la couche de renforcement est susceptible de présenter une reprise dimensionnelle.

10. Composition suivant l'une quelconque des revendications précédentes, renfermant une fraction de gel inférieure à 76%.

11. Composition suivant la revendication 10, renfermant une fraction de gel pratiquement égale à zéro.

12. Composition suivant l'une quelconque des revendications précédentes, présentant une résistivité volumique d'au moins $10^{10}$ ohms $\cdot$ cm.

13. Composition suivant l'une quelconque des revendications 1 à 11, présentant une impédance spécifique de $10^7$ à $10^{10}$ ohms $\cdot$ cm à 50 Hz.

14. Composition suivant l'une quelconque des revendications 1 à 11, présentant une résistivité volumique inférieur à $10^7$ ohms $\cdot$ cm.

15. Dispositif électrique associé à une composition analogue à un gel suivant, respectivement, la revendication 12, 13 ou 14, pour produire, respectivement, une isolation électrique, une gradation de charge ou une connexion électrique.

16. Procédé de production d'une composition analogue à un gel suivant l'une quelconque des revendications 1 à 14, qui consiste à réticuler une composition comprenant:

un polymère liquide non silicone;

un liquide dispersé dans le polymère en une quantité de 20 à 95% en poids, sur la base du poids du liquide dispersé et du polymère; et

une charge dispersée dans le polymère et/ou le liquide en une fraction en volume de 0 à 0,3, sur la base du polymère, du liquide et de la charge.

17. Procédé de protection ou d'isolation d'un substrat, qui consiste:

(a) à placer en contiguïté avec le substrat une composition analogue à un gel suivant l'une quelconque des revendications 1 à 14.

18. Procédé suivant la revendication 17, qui consiste en outre:

(b) à recouvrir au moins partiellement la composition analogue à un gel par un couvercle.

19. Procédé suivant la revendication 18, dans lequel le couvercle est susceptible de présenter une reprise dimensionnelle, le procédé consistant en outre:

(c) à provoquer une reprise de forme du couvercle.

20. Procédé suivant la revendication 17, 18 ou 19, dans lequel au moins l'un des ingrédients de la composition analogue à un gel est réticulé après la mise en place de ces éléments en contiguïté avec le substrat.

21. Procédé suivant l'une quelconque des revendications 17 à 20, dans lequel le substrat présente une isolation électrique, une gradation de charge ou une connexion électrique fournie par une composition analogue à un gel suivant, respectivement, la revendication 12, 13 ou 14.

22. Procédé suivant l'une quelconque des revendications 17 à 21, dans lequel le substrat consiste en un câble.